# EUROPEAN PATENT SPECIFICATION

(11) **EP 4 484 224 B1**
(45) Date of publication and mention of the grant of the patent: **17.09.2025**
(21) Application number: 23184794.8
(22) Date of filing: 11.07.2023
(51) Int. Cl.: B60R 9/06, B60R 9/10

(54) **LOAD CARRIER, IN PARTICULAR BIKE CARRIER, AND VEHICLE**
LASTTRÄGER, INSBESONDERE FAHRRADTRÄGER, UND FAHRZEUG
PORTE-CHARGE, EN PARTICULIER PORTE-VÉLO, ET VÉHICULE

(30) Priority: 30.06.2023 CN 202310797930
(43) Date of publication of application: 01.01.2025
(73) Proprietor: Carman Enterprise Co., Ltd., Hangzhou, 311121 (CN)
(72) Inventor: Li, Xianwei, Hangzhou (CN)
(74) Representative: Paul & Albrecht Patentanwälte PartG mbB

(56) References cited:
- DE-A1- 19 624 017
- US-A1- 2008 067 209
- US-A1- 2014 308 101
- US-A1- 2015 314 734

## Description

The present invention relates to a load carrier, in particular a bike carrier, for attachment to a vehicle, the load carrier comprising a basic structure, a front end of which can be attached to a vehicle, in particular to a rear wall of a caravan or of a motorhome, and a load receiving structure for receiving a load, in particular for receiving at least one bike or a luggage box, wherein the load carrier further comprises a lifting mechanism, via which the load receiving structure is held at the basic structure in such a way that it can be moved relative to the basic structure between a lower loading position, in which a load can be arranged on the load receiving structure, and an upper use position, in which the load receiving structure is directly held at the basic structure, wherein the lifting mechanism comprises at least one spring, in particular at least one gas pressure spring, preferably at least one pneumatic spring, which is arranged and designed such that the force to be applied to the load receiving structure by an operator is reduced when lifting the load receiving structure from its lower loading position into its upper use position and
wherein the lifting mechanism comprises at least one linkage, in particular two linkages spaced apart from each other and arranged parallel to each other, wherein one spring, in particular one gas pressure spring, is assigned to each linkage, wherein, in particular, each linkage is formed as a parallelogram linkage.

Furthermore, the present invention relates to a vehicle, in particular a caravan.

Load carriers for attachment to the rear end of a vehicle, in particular of a caravan, are often used for transporting bikes and/or for carrying a luggage box. Generally, this type of load carrier comprises attachment means by means of which it can be fixed to the rear end of a caravan, in particular to the rear wall of a caravan. In order to facilitate the attachment of loads, for example of bikes, to such a load carrier, the load carrier comprises a basic structure, which is or can be directly attached to the rear end of a vehicle, and a load receiving structure, which is held at the vehicle via a lifting mechanism such that the load receiving structure can be moved between a lower loading position, in which the load to be transported can be positioned on the load receiving structure, and an upper use position, in which the load receiving structure is spaced apart from the ground, so that the load can be transported easily and without the risk of getting into contact with the ground.

Such lifting mechanisms are often designed such that the operator must move the load receiving structure together with the load, for example a bike, arranged thereon by hand from its loading position into its use position. For doing so, the operator needs a significant amount of force in particular when heavy loads, for example E-Bikes, should be transported. In other words, the operator must apply the entire gravity force of the load receiving structure and the load to be transported thereon in order to bring the load receiving structure into its use position.

In order to facilitate this process for the operator, specific lifting mechanism exist, which comprise an electric drive motor for moving the load receiving structure from its lower loading position into its upper use position. However, it is sometimes considered as disadvantageous that such mechanism having electrical devices need a specific energy supply and are relatively expensive.

US 2014/308101 A1 discloses a load carrier for attachment to a vehicle, which comprises a basic structure, a front end of which can be attached to a vehicle, and a load receiving structure for receiving a load. The load carrier further comprises a lifting mechanism via which the load receiving structure is held at the basic structure in such a way that it can be moved relative to the basic structure between a lower loading position, in which the load can be arranged on the load receiving structure, and an upper use position, in which the load receiving structure is directly held at the basic structure. The lifting mechanism comprises springs, which are arranged and designed such that the force to be applied to the load receiving structure by an operator is reduced when lifting the load receiving structure from its loading position into its upper use position.

DE 196 24 017 A1 is disclosing a load carrier corresponding to the preamble of claim 1, US 2008/067209 A1 and US 2015/314734 A1 disclose further load carriers with a basic structure, a load receiving structure and a lifting mechanism, which is arranged and designed such that the force to be applied to the load receiving structure by an operator is reduced when lifting the load receiving structure from its lower loading position to its upper use position.

Based on this prior art, it is an object of the present invention to provide an alternative load carrier, in particular a bike carrier, which in particular avoids the above-mentioned disadvantages and which is, for the operator, easy to handle.

This object is solved by a load carrier of the type mentioned above in that each linkage comprises two cranks, one upper crank and one lower crank, one end of each crank being pivotably held at the basic structure and the other end of each crank being pivotably held at the load receiving structure.

In the load carrier of the invention a spring, in particular a gas pressure spring, preferably a pneumatic spring is provided, in order to reduce the force that an operator must apply. In other words, the spring isarranged and designed such that the operator does not act against the entire gravity force of the load receiving structure and the load transported thereon so that the spring supports the operator in this respect.

Preferably, the spring is a gas pressure spring. A gas pressure spring is a relatively simple mechanical component without the need to provide an electric power supply and/or other electric components. In this way, a simple and easy design of the load carrier, which is easy to handle by an operator, can be achieved. However, other types of springs are also conveivable.

In concrete terms, the gas pressure spring may comprise a spring housing and a spring rod, which protrudes from the spring housing, in particular from one end of the spring housing. The gas pressure spring may be a pneumatic spring. Practically, the gas pressure spring may be formed as a cylinder. The gas, in particular the air contained in the spring housing is compressed when the spring rod is drawn in, and expands when the spring rod is drawn out. In other words, a specific amount of gas is arranged in the spring housing, which is a compressible fluid.

When the load carrier is attached to a vehicle, the basic structure may be positioned near the ground in its lower loading position so that a load can be arranged on the load receiving structure in a simple manner. In its upper use position, the load receiving structure may be spaced apart from the ground when the load carrier is attached to a vehicle.

The lifting mechanism comprises at least one linkage, in particular two linkages spaced apart from each other and preferably arranged parallel to each other. By means of such a linkage, the movement of the load receiving structure relative to the basic structure is guided in a very efficient manner. Preferably, one spring, in particular one gas pressure spring, is assigned to each linkage.

Each linkage may be formed as a parallelogram linkage. This means, that different cranks, the basic structure, and the load receiving structure are pivotably connected to each other in such a way that a parallelogram is formed. By means of such a parallelogram linkage, it can be ensured that the load receiving structure cannot be tilted relative to the basic structure when the load receiving structure is moved between its loading position and its use position.

According to the invention, each linkage comprises two cranks, one upper crank and one lower crank, one end of each crank being pivotably held at the basic structure and the other end of each crank being pivotably held at the load receiving structure. In other words, the basic structure and the load receiving structure are connected to each other via two cranks. Preferably, the cranks extend parallel to each other. Furthermore, the cranks may extend at least substantially vertically, when the load receiving structure is in its use position. The vertical direction may be related to a situation, when the load carrier is attached to the rear end of a vehicle, in particular to the rear wall of a caravan.

One end of each spring, in particular of each gas pressure spring, preferably the spring housing of the gas pressure spring, may be pivotably held at the basic structure and the other end, in particular the free end of the spring rod of the gas pressure spring, may be pivotably held at the load receiving structure in such a way that a longitudinal axis defined by the spring is inclined relative to the cranks. In this way, it can be ensured that the effective length of the spring varies when the load receiving structure is moved between its loading position and its use position.

In concrete terms, each spring may be pivotably held at the pivot axis of one crank of the linkage at the basic structure and at the pivot axis of the other crank of the linkage at the load receiving structure in such a way that the spring, in particular the spring rod, is drawn out when the load receiving structure is in its use position, and the spring, in particular the spring rod, is drawn in, when the load receiving structure is in its loading position. In this way, the pivot joints, which are used for pivotably holding the cranks at the basic structure or at the load receiving structure, can be also used to pivotably hold the spring, in particular the gas pressure spring.

Preferably, the cranks of each linkage are held at a lower end section of the basic structure at one end and at an upper end section of the load receiving structure at the other end. In this way, the load receiving structure can be moved towards the bottom so that in its loading position the load receiving structure can be located at least substantially, in particular completely below the basic structure. In its use position, the load receiving structure can overlap at least partially with the basic structure when seen from behind.

The basic structure may have at least one vertical profile, in particular one vertical profile assigned to each linkage, which may extend at least substantially vertically when the basic structure is attached to a vehicle, and the cranks are held at a lower end section of the vertical profiles, and the load receiving structure has one supporting profile assigned to each vertical profile, which supporting profile(s) extend(s) parallel to the vertical profiles and which lies on the corresponding vertical profile, when the load receiving structure is in its use position. The vertical profile may be formed by a bent tube and may be also equipped with cover elements which protect the vertical profile. In concrete terms, the cover elements may have a U-shaped cross-section and are arranged at the vertical profile in such a way that they are open rearwardly. The supporting profile may be a bent and/or punched out profile which may also be surrounded at least partially by a cover element. In combination with a parallelogram linkage, it is ensured that the vertical profiles and the supporting profiles always extend parallel to each other as a tilting of the load receiving structure relative to the basic structure is avoided.

According to a further aspect of the invention, in particular in context with the previously described load carrier, locking means may be provided by means of which the load receiving structure can be a locked relative to the basic structure when the load receiving structure is in its use position. Such locking means ensure that - during travel - the load receiving structure remains in its use position without the risk of an unintended movement into its loading position.

In concrete terms, the locking means may comprise at least one locking element, in particular a plurality of locking elements, preferably in the form of hooks, which are movably, in particular pivotably held at the load receiving structure between an engaging position, in which the locking elements can be in engagement with the basic structure, in particular into or behind corresponding engagement elements of the basic structure, in order to lock the load receiving structure at the basic structure when the load receiving structure is in its use position, and a release position, in which the locking elements are out of engagement from the basic structure in order to release the load receiving structure from the basic structure when the load receiving structure should be moved out of its use position. In other words, locking elements may be provided, which can be brought into engagement preferably with corresponding engagement elements of the basic structure. In concrete terms, the engagement elements may be formed as small plates, in particular made of metal, and may be held at the vertical profiles. The engagement elements formed as small plates may be arranged obliquely with regard to a vertical and an horizontal direction. In order to bring the locking elements automatically into engagement at the basic structure, when the load receiving structure is moved into its use position, the locking elements may have a corresponding chamfer at their free front end. The locking elements may be biased towards their engaging position.

According to a preferred embodiment, two locking elements are assigned to each linkage, one upper locking element being held at an upper end section of the load receiving structure and one lower locking element being held at a bottom end section of the load receiving structure. Accordingly, the locking elements assigned to each linkage are vertically spaced apart from each other, so that a stable fixation of the load receiving structure at the basic structure can be achieved.

The two locking elements assigned to a linkage may be coupled to each other in such a way that they move synchronously between their engaging position and their release position. Preferably, all locking elements of the load carrier are coupled to each other in such way that they move synchronously. In concrete terms, the two locking elements assigned to a linkage may be coupled by means of a connecting rod, which is in particular pivotably connected at its one end to the lower locking element and at its other end to the upper locking element. The connection to the coupling rod is preferably realized on the opposite side of the free end of the locking elements, which can be brought into engagement with the basic structure, with respect to the pivotable connection (pivot axis) to the load receiving structure. Such a coupling rod allows to transmit forces in both directions, i.e. pressure forces and tensile forces.

At least one crank, in particular the upper cranks of the linkages may have in proximity to the load receiving structure engagement openings, into which at least one locking element, in particular the upper locking elements, can engage, when the load receiving structure is in its lower loading position. Preferably, the locking elements are in engagement in the engagement openings, when the locking elements are in their engaging position. In this way, the load receiving structure can also be locked in its lower loading position. Accordingly, it is excluded that by means of the pressure gas spring the load receiving structure moves out of its lower loading position unintentionally. In other words, the locking elements must be brought out of their engaging position in order to move the load receiving structure out of its loading position.

Preferably, the load receiving structure comprises actuating means, which are designed and arranged to move the locking elements out of their engaging position towards their release position. In concrete terms, the actuating means may comprise a push button, which is arranged at the load receiving structure, in particular at a central bottom section of the load receiving structure, wherein the push button is coupled to the locking elements in such a way that it can be moved between an engaging status, in which the locking elements are in their engaging position, and a releasing status, in which the locking elements can be moved out of their engaging position towards their release position. In other words, the actuating means can be used by an operator to bring the locking elements into their release position. Preferably, the push button is arranged at a central bottom section of the load receiving structure, which may in particular be formed by a bent tube, in particular in the shape of a U. The central bottom section, in particular the free ends of the bent tube, may be connected to the lower ends of the supporting profiles.

In order to transmit the movement of the push button into a movement of the locking elements, the push button may be operatively connected to at least one bowden cable by means of which the push button is connected to at least one locking element. Preferably, the push button is operatively connected to one bowden cable assigned to each linkage, and each bowden cable is, at its other end, connected to a locking element, in particular to the lower locking element assigned to the corresponding linkage or to a connecting rod. Such a bowden cable is advantageous in that it allows to transfer translational movements into different directions so that the bowden cable can be used to actuate the respective locking element.

The load carrier may further comprise additional securing means by means of which the load receiving structure can be secured in its use position at the basic structure. In concrete terms, the securing means may comprise securing hooks, which are preferably pivotably mounted at the basic structure, in particular at each vertical profile of the basic structure, and can engage into corresponding securing protrusions formed at the load receiving structure. The securing hooks may be arranged laterally at the vertical profiles.

The load receiving structure, in particular a central bottom section of the load receiving structure extending rearwardly, may carry at least one, in particular one, two or three profile rail(s) in order to receive the wheels of a corresponding number of bikes. Furthermore, the load receiving structure may have, in particular at an upper end section, a yoke extending rearwardly in order to support the frame of a bike to the load receiving structure.

The object of the invention is also solved by a vehicle, in particular a caravan or a motorhome, with a load carrier as described above, wherein the load carrier is preferably attached to the rear wall of the vehicle.

With regard to the embodiment of the invention, reference is also made to the sub-claims and to the following description of an exemplary embodiment with reference to the attached drawing. In the drawing shows:
- Figure 1: a caravan with a load carrier according to the invention in a perspective view;
- Figure 2: the load carrier of Fig. 1 carrying a bike, wherein the load receiving structure is in its loading position, in a perspective view;
- Figure 3: the load carrier of Fig. 1 carrying a bike, wherein the load receiving structure is in its use position, in a perspective view;
- Figure 4: the load carrier of Fig. 1, wherein the load receiving structure is in its loading position, in a perspective view;
- Figure 5: the load carrier of Fig. 1, wherein the load receiving structure is in its use position, in a perspective view;
- Figure 6: the load carrier of Fig. 1 without some cover elements, wherein the load receiving structure is in its loading position in a perspective view;
- Figure 7: the load carrier of Fig. 1 without some cover elements, wherein the load receiving structure is in its use position, in a perspective view;
- Figure 8: the linkage of the load carrier of Fig. 1 in its loading position in a schematical view;
- Figure 9: the linkage shown in Fig. 8 in its use position in a schematical view;
- Figure 10: a section of the load carrier of Fig. 1, wherein the locking elements are in their engaging position, in a sectional view;
- Figure 11: a section showing the upper locking element in a perspective view;
- Figure 12: a section showing the lower locking element in its engaging position in a perspective view;
- Figure 13: a section of the load carrier, wherein the locking elements are in their release position, in a sectional view;
- Figure 14: a section of the load carrier comprising the upper locking element, which is in its release position, in a perspective view;
- Figure 15: a section comprising the lower locking element, which is in its release position, in a detailed perspective view;
- Figure 16: the load carrier of Fig. 1 without some elements showing the actuating means in a perspective view;
- Figure 17: the push button of the actuating means in a detailed sectional view;

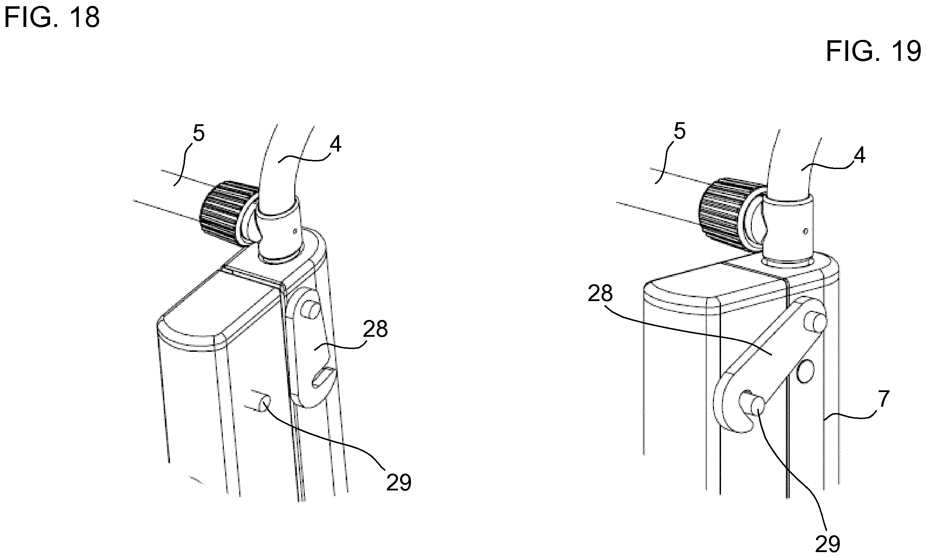

- Figure 18: the securing means of the load carrier of Fig. 1, wherein the securing hook is not in engagement with the load receiving structure, in a perspective view; and
- Figure 19: the securing means shown in Fig. 18, wherein the securing hook is in engagement with the load receiving structure, in a perspective view.

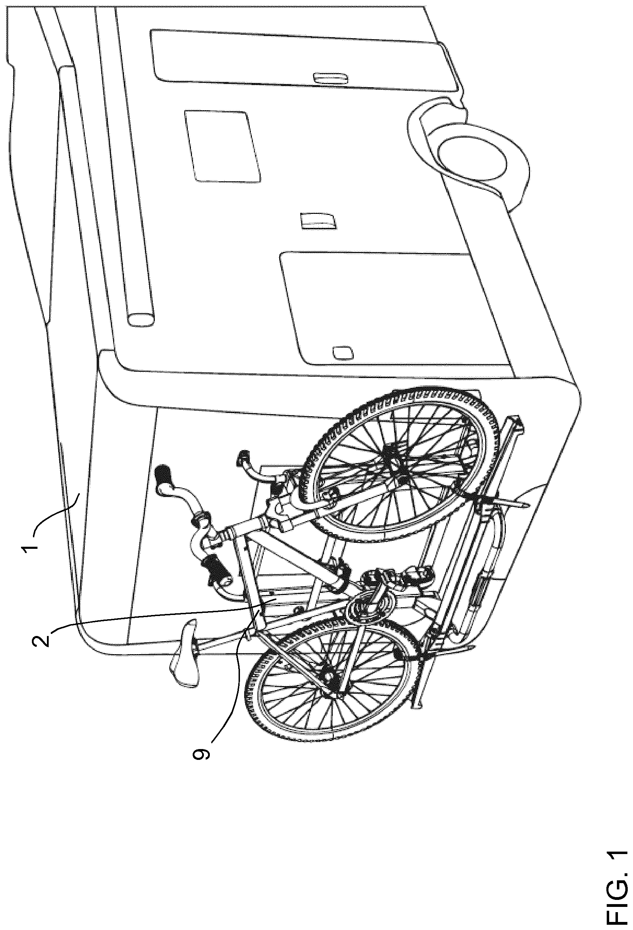

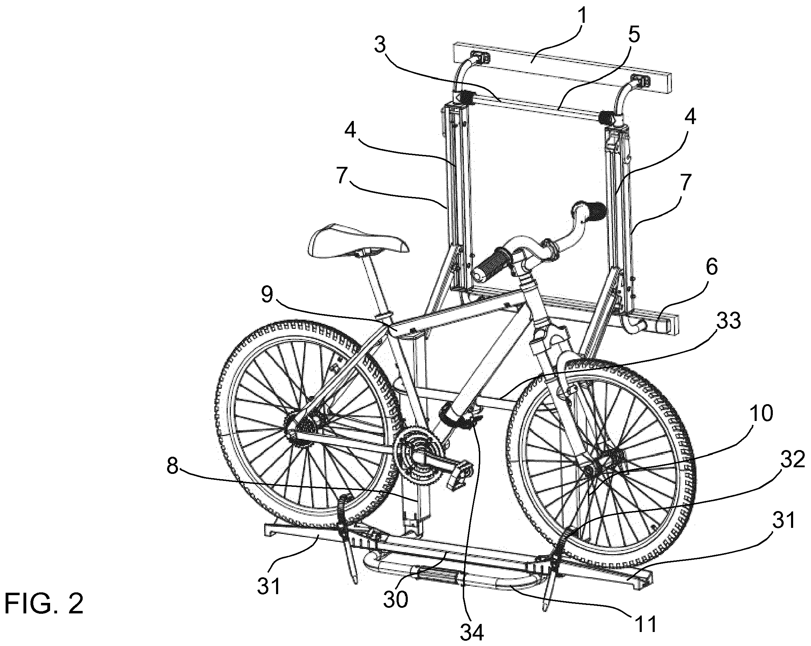

Figure 1 shows a rear section of a caravan 1 and a load carrier 2 according to the invention in the form of a bike carrier which is attached to the rear wall of the caravan 1. The load carrier 2 comprises a basic structure 3. This basic structure 3 comprises, as it is visible for example in figure 2, two vertical profiles 4 in the form of a bent tube in the shape of a C. The vertical profiles 4 are arranged parallel to each other and are spaced apart laterally from each other. The free ends of the vertical profiles 4 are attached to the wall of the caravan 1.

The basic structure 3 further comprises one transverse beam 5, which connects the vertical profiles 4 in an upper region. Furthermore, at the bottom free end of the vertical profiles 4, an end beam 6 connecting the vertical profiles 4 and being attached to the rear wall of the caravan 1 is provided.

In the middle section of the vertical profiles 4, the basic structure 3 comprises a cover element 7, which surrounds the vertical profile 4 in a middle section partially and allows access to the vertical profile 4 from the rear side.

The load carrier 2 further comprises a load receiving structure 8 for receiving, in the present case, exactly one bike, as it is shown in figures 1 to 3. The load receiving structure comprises two supporting profiles 10 which extend parallel to each other and are spaced apart from one another at the same distance as the vertical profiles 4 of the basic structures 3 are spaced apart from one another. The load receiving structure 8 further comprises a central bottom section 11, which is made of a U-shaped bent tube and connects the supporting profiles 10 at their bottom end.

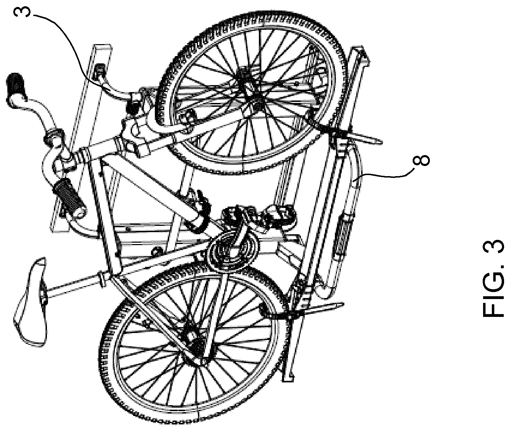

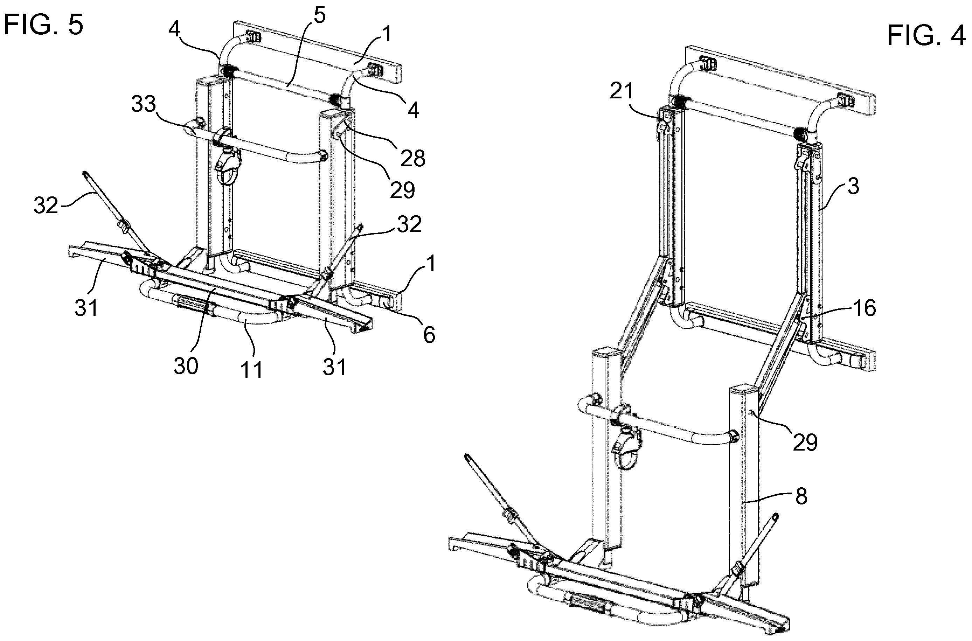

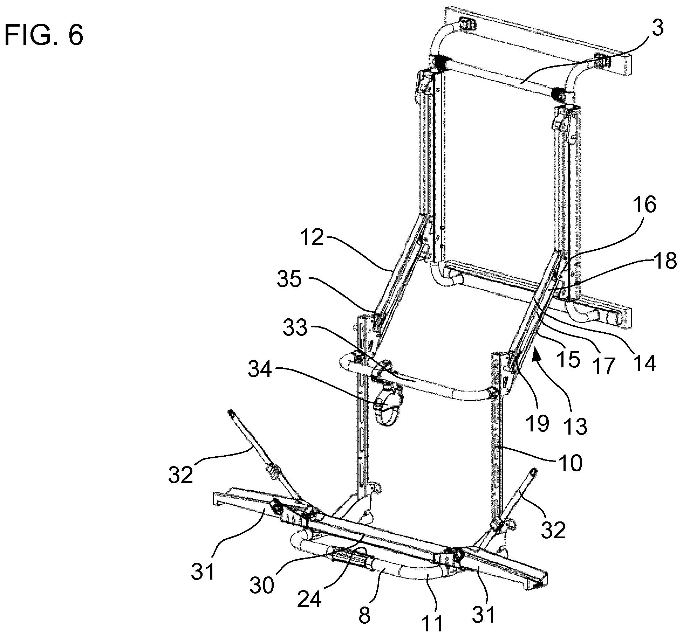

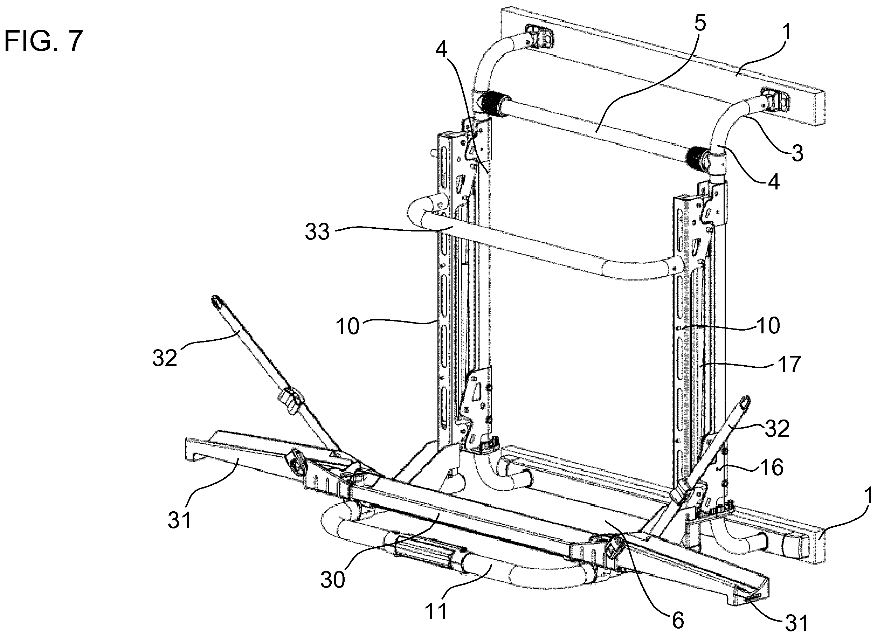

The load carrier 2 further comprises a lifting mechanism 12, via which the load receiving structure 8 is held at the basic structure 3. The load receiving structure 8 can be moved relative to the basic structure 3 between a lower loading position, which is shown in figures 2, 4 and 6 for example, and an upper use position, which is shown for example in figures 3, 5 and 7. In the lower loading position, the load receiving structure 8 is positioned near the ground when the load carrier 2 is attached to a vehicle, so that a load can be arranged on the load receiving structure 8. In the upper use position, the load receiving structure 8 is spaced apart from the ground, when the load carrier 2 is attached to a vehicle, and is directly held at the basic structure 3.

The lifting mechanism 12 comprises two linkages 13 spaced apart from one another and arranged parallel to each other. Each linkage 13 is formed as a parallelogram linkage and is assigned to one vertical profile 4 and one supporting profile 10.

Each linkage 13 comprises two cranks 14, 15, one upper crank 14 and one lower crank 15. One end of each crank 14, 15 is pivotable held at a lower end section of the basic structure 3 and the other end of each crank 14, 15 is pivotably held at an upper end section of the load receiving structure 8. The cranks 14, 15, extend at least substantially vertically, when the load receiving structure 8 is in its use position. As it is visible in figures 2, 4 and 6, the cranks 14, 15 extend rearwardly and downwardly, when the load receiving structure 8 is in its loading position.

In concrete terms, the basic structure 3 comprises holding elements 16 at the bottom end section in the form of bent sheets, which are screwed to the vertical profile and which carry or hold pivot pins, by means of which the cranks 14, 15 are pivotably held. In practically the same manner, in the top end sections of the supporting profiles 10 of the load receiving structure 8, the pivot pins for holding the cranks 14, 15 are held in corresponding openings formed in the supporting profile 10.

In order to reduce the force to be applied to the load receiving structure 8 by an operator when lifting the load receiving structure 8 from its lower loading position into its upper position, the lifting mechanism 12 comprises in total two springs in the form of gas pressure springs 17, one gas pressure spring 17, presently a pneumatic spring, being assigned to each linkage 13. Each gas pressure spring 17 comprises a spring housing 18 and a spring rod 19, so that by a drawing in the spring rod 19, the air in the spring housing 18 is compressed, and by drawing out the spring rod 19, the air in the spring housing 18 expands.

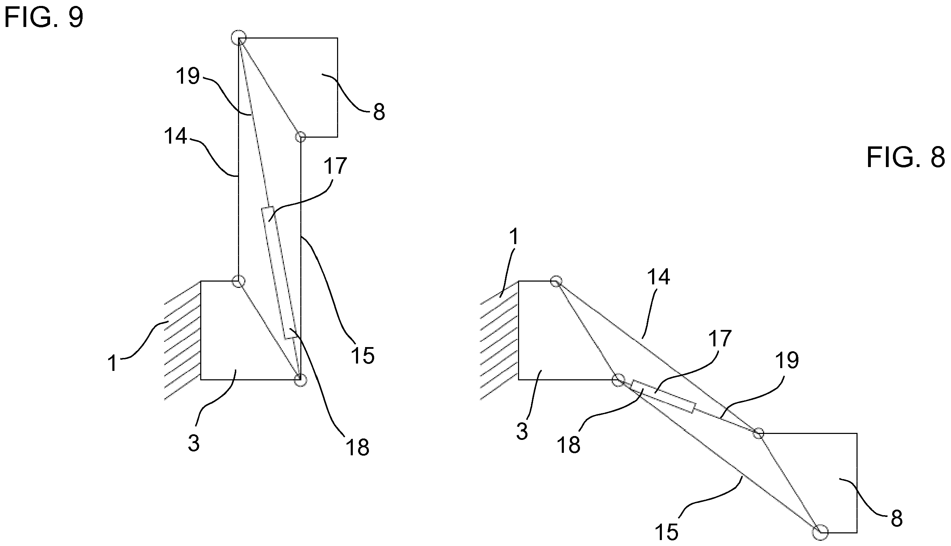

One end of each gas pressure spring, presently the end of the spring housing 18, is pivotably held at the pivot axis of the lower crank 15 at the basic structure 3 and the spring rod 19 is pivotably held at the pivot axis of the upper crank 14 at the load receiving structure 8. In this way, the spring rod 19 is drawn out, when the load receiving structure 8 is in its use position, and the spring rod 19 is drawn in, when the load receiving structure 8 is in its loading position. The lifting mechanism 12 is shown schematically in figures 8 and 9. In figure 8, the load receiving structure 8 is in its lower loading position, whereas in figure 9 the load receiving structure 8 is in its upper use position.

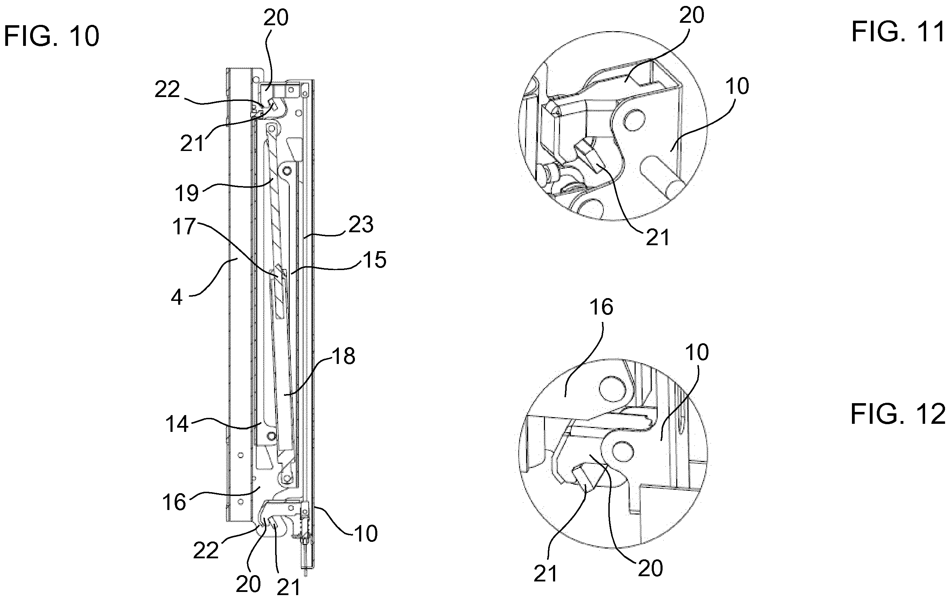

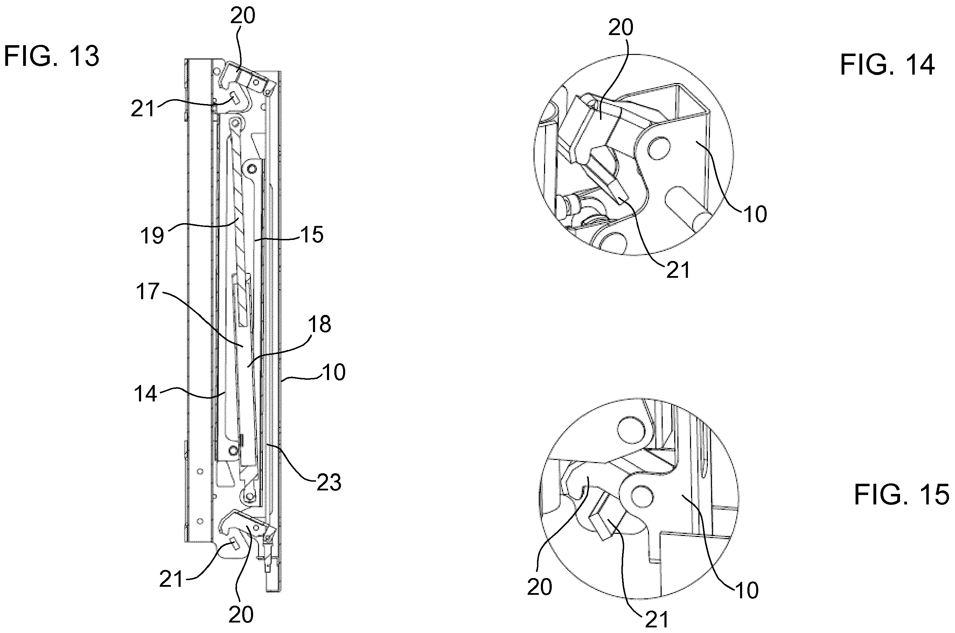

The load carrier 2 further comprises locking means by means of which the load receiving structure 8 can be locked relative to the basic structure 3 when the load receiving structure 8 is in its use position. For this purpose, the locking means comprise in total four locking elements 20 in the form of hooks, which are pivotably held at the load receiving structure 8, specifically at the supporting profiles 10. Two locking elements 2 are assigned to each linkage 13. The locking elements 20 can be pivoted between an engaging position at it is shown in figures 10 to 12, and a release position, which is shown in figures 13 to 15. In the engaging position, the locking elements 20 are or can be in engagement with the basic structure 3, in particular into corresponding engagement elements 21 held at the holding elements 16. In the release position, the locking elements 20 are out of engagement from the engagement elements 21 so that the load receiving structure 8 can be released from the basic structure 3. In this way, the load receiving structure 8 can be moved out of its use position.

In order to bring the locking elements 20 automatically into engagement at the basic structure 3, they have a chamfer 22 at their free front end. Furthermore, they can be biased towards their engaging position. In concrete terms, two locking elements 20 are assigned to each linkage 13. One upper locking element 20, shown for example in figures 11 and 14, is held at an upper end section of the load receiving structure 8 and one lower locking element 20, shown for example in figures 12 and 15, is held at a bottom end section of the load receiving structure 8.

The two locking elements 20 assigned to a linkage 13 are coupled to each other in such a way that they move synchronously between their engaging position and their release position. For this purpose, the two locking elements 20 assigned to a linkage 13 are coupled by means of a connecting rod 23, which is pivotably connected at its one end to the lower locking element 20 and at its other end to the upper locking element 20.

The load receiving structure 8 further comprises actuating means, which are designed and arranged to move the locking elements 20 out of their engaging position towards their release position. In concrete terms, the actuating means comprise a push button 24, which is arranged in the middle of the central bottom section 11 of the load receiving structure 8. The push button 24 is coupled to the locking elements 20 in such a way that it can be moved between an engaging status, in which the locking elements 20 are in their engaging position, and a releasing status, in which the locking elements 20 can be moved out of their engaging position towards their release position. The push button 24 is connected to two bowden cables 25, wherein each bowden cable 15 is, at its other end, connected to the bottom end of the connecting rod 23 and thus to the lower locking element 20 and the upper locking element 20. The bowden cables 25 may be guided in a corresponding guiding hose 25a.

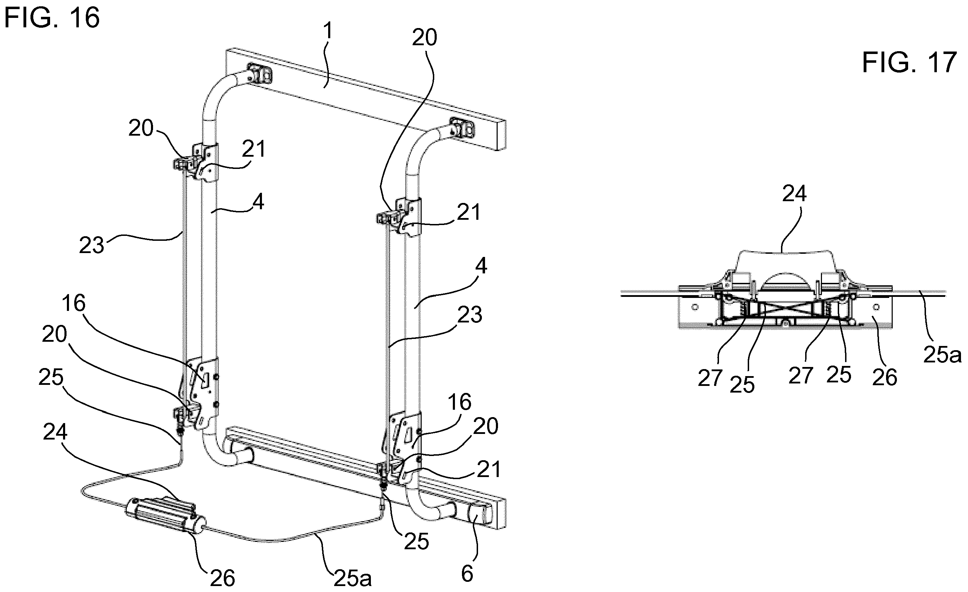

The detailed embodiment of the push button is shown in figures 16 and 17. The push button 24 is movably held at a button housing 26 arranged in the central bottom section 11. The push button 24 is biased towards its engaging status, which is shown in figure 15, by means of corresponding compression springs 27. When the push button 24 is moved downwardly in figure 17 into its releasing status, the bowden cables 25 are pulled so that the connecting rod 23 is moved downwardly, thus bringing the locking elements 20 into their release position. When they have reached their release position, the load receiving structure 8 can be moved into its lower loading position, which is shown in figures 2, 4 and 6.

Additional securing means are provided in order to further secure the load receiving structure 8 at the basic structure 3, when the load receiving structure 8 is in its use position. These securing means comprise two securing hooks 28 which are pivotably held at the basic structure 3, in concrete terms at the holding elements 16, and can be brought into engagement into corresponding securing protrusions 29 arranged at the load receiving structure 8.

The central bottom section 11 of the load receiving structure 8 carries one profile rail 30 in order to receive the wheels of a bike 9. Suitable fixing means can be provided at the profile rails in a manner known per se. In the present case, two wheel holders 31 are provided, which are pushed on the free ends of the profile rail 30. These wheel holders 31 comprise tensioning belts 32 in order to fix the wheels of the bike 9.

Furthermore, the load carrier 2 comprises a yoke 33 extending rearwardly in order to support the frame of a bike attached to the load receiving structure 8. For this purpose, a so-called strap-frame holder 34 is provided which connects the frame of the bike 9 to the yoke 33.

When the load receiving structure should be moved out of its use position shown in figures 1, 3, 5 and 7 into its loading position, at first the securing hooks 28 must be brought manually out of engagement from the securing protrusions 29. Then, the push button 24 must be actuated and moved into its releasing status. In this way, the bowden cables 25 are pulled and the connecting rods 23 are moved downwardly. In this way, the free ends of the locking elements 20 are brought out of engagement from the engagement elements 21.

Then, the load receiving structure 8 together with the bike 9 attached thereto can be moved towards its lower loading position. During this movement, which is guided by the linkages 12, the spring rod 19 is drawn in so that the air in the spring housing 18 is compressed. This is supported by the gravity force created by the load receiving structure 8 and the bike 9 attached thereto. When the lower loading position is reached, the locking elements 20 come into engagement into corresponding engagement openings 35 formed in the upper cranks 14. In this way, the load receiving structure 8 can be secured in its lower loading position.

When a bike has been attached to the load receiving structure 8, the load receiving structure 8 can be moved upwards into its use position. During this movement, the spring rod 19 is drawn out so that the air in the spring housing 18 can expand, thus supporting the operator and reducing the force to be applied by the operator. When the load receiving structure 8 reaches its upper use position, the locking elements 20 come into engagement into the engagement elements 21 thus locking the load receiving structure 8 in its upper use position. Finally, the securing hooks 28 can be pivoted such that they engage into the corresponding securing protrusions 29 formed in the load receiving structure 8.

In this way, the operator is supported by means of such springs in the form of gas pressure springs 17, so that the force to be applied by an operator is significantly reduced in a very space-saving and cost-effective way.

### LIST OF REFERENCE NUMBERS

- 1: Caravan
- 2: Load carrier
- 3: Basic structure
- 4: Vertical profile
- 5: Transverse beam
- 6: End beam
- 7: Cover element
- 8: Load receiving structure
- 9: Bike
- 10: Supporting profile
- 11: Central bottom section
- 12: Lifting mechanism
- 13: Linkage
- 14: Upper crank
- 15: Lower crank
- 16: Holding element
- 17: Gas pressure spring
- 18: Spring housing
- 19: Spring rod
- 20: Locking element
- 21: Engagement element
- 22: Chamfer
- 23: Connecting rod
- 24: Push button
- 25: Bowden cable
- 25a: Guiding hose
- 26: Button housing
- 27: Compression spring
- 28: Securing hook
- 29: Securing protrusion
- 30: Profile rail
- 31: Wheel holder
- 32: Tensioning belt
- 33: Yoke
- 34: Strap frame holder
- 35: Engagement opening

## Claims

1. Load carrier (2), in particular bike carrier, for attachment to a vehicle, the load carrier (2) comprising
a basic structure (3), a front end of which can be attached to a vehicle, in particular to a rear wall of a caravan (1) or of a motorhome, and
a load receiving structure (8) for receiving a load, in particular for receiving at least one bike (9) or a luggage box,
wherein the load carrier (2) further comprises a lifting mechanism (12), via which the load receiving structure (8) is held at the basic structure (3) in such a way that it can be moved relative to the basic structure (3) between a lower loading position, in which a load can be arranged on the load receiving structure (8), and an upper use position, in which the load receiving structure (8) is directly held at the basic structure (3),
**wherein** the lifting mechanism (12) comprises at least one spring, in particular at least one gas pressure spring (17), preferably at least one pneumatic spring, which is arranged and designed such that the force to be applied to the load receiving structure (8) by an operator is reduced when lifting the load receiving structure (8) from its lower loading position into its upper use position and
wherein the lifting mechanism (12) comprises at least one linkage (13), in particular two linkages (13) spaced apart from each other and arranged parallel to each other, wherein one spring, in particular one gas pressure spring (17), is assigned to each linkage (13), wherein, in particular, each linkage (13) is formed as a parallelogram linkage,
**characterized in that** each linkage (13) comprises two cranks, one upper crank (14) and one lower crank (15), one end of each crank being pivotably held at the basic structure (3) and the other end of each crank being pivotably held at the load receiving structure (8).

2. Load carrier (2) according to claim 1, **characterized in that** the cranks extend at least substantially vertically, when the load receiving structure (8) is in its use position.

3. Load carrier (2) according to claim 1 or 2, **characterized in that** one end of each spring, in particular a spring housing (18) of the gas pressure spring (17), is pivotably held at the basic structure (3) and the other end of the spring, in particular a spring rod (19) of the gas pressure spring (17), is pivotably held at the load receiving structure (8) in such a way that the longitudinal axis defined by the gas pressure spring (17) is inclined relative to the cranks.

4. Load carrier (2) according to claim 3, **characterized in that** each spring is pivotably held at the pivot axis of one crank of the linkage (13) at the basic structure (3) and at the pivot axis of the other crank of the linkage (13) at the load receiving structure (8) in such a way that the spring, in particular the spring rod (19), is drawn out when the load receiving structure (8) is in its use position, and the spring, in particular the spring rod (19) is drawn in, when the load receiving structure (8) is in its loading position.

5. Load carrier (2) according to any of claims 1 to 4, **characterized in that** the cranks of each linkage (13) are held at a lower end section of the basic structure (3) at one end and at an upper end section of the load receiving structure (8) at the other end.

6. Load carrier (2) according to any of claims 1 to 5, **characterized in that** the basic structure (3) has at least one vertical profile (4), in particular one vertical profile (4) assigned to each linkage (13), and the cranks are held at a lower end section of the vertical profiles (4), and the load receiving structure (8) has, assigned to each vertical profile (4), a supporting profile (10), which extends parallel to the vertical profiles (4) and which lies on the corresponding vertical profile (4), when the load receiving structure (8) is in its use position.

7. Load carrier (2) according to any of the preceding claims, **characterized in that** locking means are provided by means of which the load receiving structure (8) can be a locked relative to the basic structure (3) when the load receiving structure (8) is in its use position.

8. Load carrier (2) according to claim 7, **characterized in that** the locking means comprise at least one locking element (20), in particular a plurality of locking elements (20), preferably in the form of hooks, which are movably, in particular pivotably held at the load receiving structure (8) between an engaging position, in which the locking elements (20) can be in engagement with the basic structure (3), in particular into or behind corresponding engagement elements (21) of the basic structure (3), in order to lock the load receiving structure (8) at the basic structure (3) when the load receiving structure (8) is in its use position, and a release position, in which the locking elements (20) are out of engagement from the basic structure (3) in order to release the load receiving structure (8) from the basic structure (3) when the load receiving structure (8) should be moved out of its use position, wherein, in particular, the locking elements (20) have a chamfer (22) at their free front end in order to bring them automatically into engagement at the basic structure (3) and/or the locking elements (20) are biased towards their engaging position.

9. Load carrier (2) according to claim 10 and any of claims 1 to 6, **characterized in that** two locking elements (20) are assigned to each linkage (13), one upper locking element (20) being held at an upper end section of the load receiving structure (8) and one lower locking element (20) being held at a bottom end section of the load receiving structure (8), wherein, in particular, the two locking elements (20) assigned to a linkage (13) are coupled to each other in such a way that they move synchronously between their engaging position and their release position, wherein, preferably, the two locking elements (20) assigned to a linkage (13) are coupled by means of a connecting rod (23), which is in particular pivotably connected at its one end to the lower locking element (20) and at its other end to the upper locking element (20).

10. Load carrier (2) according to any of claims 8 or 9, **characterized in that** the load receiving structure (8) comprises actuating means, which are designed and arranged to move the locking elements (20) out of their engaging position towards their release position.

11. Load carrier (2) according to claim 8, **characterized in that** the actuating means comprise a push button (24), which is arranged at the load receiving structure (8), in particular at a central bottom section (11) of the load receiving structure (8), wherein the push button (24) is coupled to the locking elements (20) in such a way that it can be moved between an engaging status, in which the locking elements (20) are in their engaging position, and in a releasing status, in which the locking elements (20) can be moved out of their engaging position towards their release position.

12. Load carrier (2) according to claim 11, **characterized in that** the push button (24) is operatively connected to at least one bowden cable (25) by means of which the push button (24) is connected to at least one locking element (20).

13. Load carrier (2) according to claim 12 and of claims 8 to 10, **characterized in that** the push button (24) is operatively connected to one bowden cable (25) assigned to each linkage (13), and each bowden cable (25) is, at its other end, connected to a connecting rod (23) or to a locking element (20), in particular to the lower locking element (20) assigned to the corresponding linkage (13).

14. Vehicle, in particular a caravan (1) or a motorhome, with a load carrier (2) according to any of the preceding claims.

## Patentansprüche

1. Lastenträger (2), insbesondere Fahrradträger, zur Befestigung an einem Fahrzeug, wobei der Lastenträger (2) umfasst
eine Grundstruktur (3), deren vorderes Ende an einem Fahrzeug, insbesondere an einer Rückwand eines Wohnwagens (1) oder eines Wohnmobils, befestigbar ist, und
eine Lastaufnahmestruktur (8) zur Aufnahme einer Last, insbesondere zur Aufnahme mindestens eines Fahrrads (9) oder einer Gepäckbox,
wobei der Lastenträger (2) ferner eine Hebevorrichtung (12) umfasst, über die die Lastaufnahmestruktur (8) an der Grundstruktur (3) derart gehalten ist, dass sie relativ zur Grundstruktur (3) zwischen einer unteren Ladeposition, in der eine Last auf der Lastaufnahmestruktur (8) angeordnet warden kann, und einer oberen Gebrauchsposition, in der die Lastaufnahmestruktur (8) direkt an der Grundstruktur (3) gehalten ist, bewegbar ist
**wobei** der Hebemechanismus (12) mindestens eine Feder, insbesondere mindestens eine Gasdruckfeder (17), vorzugsweise mindestens eine pneumatische Feder umfasst, die so angeordnet und ausgebildet ist, dass die von einem Bediener auf die Lastaufnahmestruktur (8) aufzubringende Kraft beim Anheben der Lastaufnahmestruktur (8) aus ihrer unteren Ladeposition in ihre obere Gebrauchsposition verringert wird, und
wobei der Hebemechanismus (12) mindestens ein Gestänge (13), insbesondere zwei voneinander beabstandete und parallel zueinander angeordnete Gestänge (13) umfasst, wobei jedem Gestänge (13) eine Feder, insbesondere eine Gasdruckfeder (17), zugeordnet ist, wobei insbesondere jedes Gestänge (13) als Parallelogrammgestänge ausgebildet ist,
**dadurch gekennzeichnet, dass** jedes Gestänge (13) zwei Kurbeln, eine obere Kurbel (14) und eine untere Kurbel (15), umfasst, wobei ein Ende jeder Kurbel schwenkbar an der Grundstruktur (3) und das andere Ende jeder Kurbel schwenkbar an der Lastaufnahmestruktur (8) gehalten ist.

2. Lastträger (2) nach Anspruch 1, **dadurch gekennzeichnet, dass** die Kurbeln zumindest im Wesentlichen vertikal verlaufen, wenn sich die Lastaufnahmestruktur (8) in ihrer Gebrauchsposition befindet.

3. Lastträger (2) nach Anspruch 1 oder 2, **dadurch gekennzeichnet, dass** ein Ende jeder Feder, insbesondere ein Federgehäuse (18) der Gasdruckfeder (17) schwenkbar an der Grundstruktur (3) gehalten ist und das andere Ende der Feder, insbesondere eine Federstange (19) der Gasdruckfeder (17), schwenkbar an der Lastaufnahmestruktur (8) derart gehalten ist, dass die von der Gasdruckfeder (17) definierte Längsachse relativ zu den Kurbeln geneigt ist.

4. Lastträger (2) nach Anspruch 3, **dadurch gekennzeichnet, dass** jede Feder an der Schwenkachse einer Kurbel des Gestänges (13) an der Grundstruktur (3) und an der Schwenkachse der anderen Kurbel des Gestänges (13) an der Lastaufnahmestruktur (8) derart schwenkbar gehalten ist, dass die Feder, insbesondere die Federstange (19) herausgezogen ist, wenn die Lastaufnahmestruktur (8) in ihrer Gebrauchsposition ist, und die Feder, insbesondere die Federstange (19), eingezogen ist, wenn die Lastaufnahmestruktur (8) in ihrer Ladeposition ist.

5. Lastträger (2) nach einem der Ansprüche 1 bis 4, **dadurch gekennzeichnet, dass** die Kurbelarme jedes Gestänges (13) an einem unteren Endabschnitt der Grundstruktur (3) an einem Ende und an einem oberen Endabschnitt der Lastaufnahmestruktur (8) am anderen Ende gehalten sind.

6. Lastträger (2) nach einem der Ansprüche 1 bis 5, **dadurch gekennzeichnet, dass** die Grundstruktur (3) mindestens ein vertikales Profil (4), insbesondere jedem Gelenk (13) ein vertikales Profil (4) zugeordnet, aufweist und die Kurbeln an einem unteren Endabschnitt der vertikalen Profile (4) gehalten sind, und die Lastaufnahmestruktur (8), jedem vertikalen Profil (4) zugeordnet, ein Stützprofil (10) aufweist ist, das sich parallel zu den vertikalen Profilen (4) erstreckt und in der Gebrauchsposition der Lastaufnahmestruktur (8) auf dem zugehörigen vertikalen Profil (4) aufliegt.

7. Lastträger (2) nach einem der vorstehenden Ansprüche, **dadurch gekennzeichnet, dass** Verriegelungsmittel vorgesehen sind, mittels derer die Lastaufnahmestruktur (8) in ihrer Gebrauchsposition gegenüber der Grundstruktur (3) verriegelbar ist.

8. Lastträger (2) nach einem der vorstehenden Ansprüche, **dadurch gekennzeichnet, dass** die Verriegelungsmittel mindestens ein Verriegelungselement (20), insbesondere mehrere Verriegelungselemente (20), vorzugsweise in Form von Haken, umfassen, die an der Lastaufnahmestruktur (8) zwischen einer Eingriffsstellung, in der die Verriegelungselemente (20) mit der Grundstruktur (3), insbesondere in oder hinter entsprechende Eingriffselemente (21) der Grundstruktur (3), in Eingriff stehen können, um die Lastaufnahmestruktur (8) an der Grundstruktur (3) zu verriegeln, wenn sich die Lastaufnahmestruktur (8) in ihrer Gebrauchsposition befindet, und einer Freigabestellung, in der die Verriegelungselemente (20) außer Eingriff von der Grundstruktur (3) stehen, um die Lastaufnahmestruktur (8) von der Grundstruktur (3) zu lösen, wenn die Lastaufnahmestruktur (8) aus ihrer Gebrauchsposition bewegt werden soll, wobei insbesondere die Verriegelungselemente (20) an ihrem freien vorderen Ende eine Fase (22) aufweisen, um sie automatisch in Eingriff mit der Grundstruktur (3) zu bringen, und/oder die Verriegelungselemente (20) in ihre Eingriffsstellung vorgespannt sind, beweglich, insbesondere schwenkbar, gehalten sind.

9. Lastträger (2) nach Anspruch 10 und einem der Ansprüche 1 bis 6, **dadurch gekennzeichnet, dass** jedem Gestänge (13) zwei Verriegelungselemente (20) zugeordnet sind, wobei ein oberes Verriegelungselement (20) an einem oberen Endabschnitt der Lastaufnahmestruktur (8) und ein unteres Verriegelungselement (20) an einem unteren Endabschnitt der Lastaufnahmestruktur (8) gehalten sind, wobei, insbesondere, die beiden einem Gestänge (13) zugeordneten Verriegelungselemente (20) so miteinander gekoppelt sind, dass sie sich zwischen ihrer Eingriffsstellung und ihrer Freigabestellung synchron bewegen, wobei, vorzugsweise, die beiden einem Gestänge (13) zugeordneten Verriegelungselemente (20) mittels einer Verbindungsstange (23) gekoppelt sind, die insbesondere an ihrem einen Ende mit dem unteren Verriegelungselement (20) und an ihrem anderen Ende mit dem oberen Verriegelungselement (20) schwenkbar verbunden ist.

10. Lastträger (2) nach einem der Ansprüche 8 oder 9, **dadurch gekennzeichnet, dass** die Lastaufnahmestruktur (8) Betätigungsmittel umfasst, die dazu ausgelegt und angeordnet sind, die Verriegelungselemente (20) aus ihrer Eingriffsposition in Richtung ihrer Freigabeposition zu bewegen.

11. Lastträger (2) nach Anspruch 8, **dadurch gekennzeichnet, dass** die Betätigungsmittel einen Druckknopf (24) umfassen, der an der Lastaufnahmestruktur (8), insbesondere an einem mittleren Bodenabschnitt (11) der Lastaufnahmestruktur (8), angeordnet ist, wobei der Druckknopf (24) mit den Verriegelungselementen (20) derart gekoppelt ist, dass er zwischen einem Eingriffszustand, in dem sich die Verriegelungselemente (20) in ihrer Eingriffsstellung befinden, und einem Freigabezustand, in dem die Verriegelungselemente (20) aus ihrer Eingriffsstellung in ihre Freigabestellung bewegbar sind, bewegbar ist.

12. Lastträger (2) nach Anspruch 11, **dadurch gekennzeichnet, dass** der Druckknopf (24) mit mindestens einem Bowdenzug (25) in Wirkverbindung steht, mittels dessen der Druckknopf (24) mit mindestens einem Verriegelungselement (20) verbunden ist.

13. Lastträger (2) nach Anspruch 12 und nach den Ansprüchen 8 bis 10, **dadurch gekennzeichnet, dass** der Druckknopf (24) mit einem jedem Gestänge (13) zugeordneten Bowdenzug (25) betätigbar verbunden ist, und jeder Bowdenzug (25) an seinem anderen Ende mit einer Verbindungsstange (23) oder mit einem Verriegelungselement (20), insbesondere mit dem dem entsprechenden Gestänge (13) zugeordneten unteren Verriegelungselement (20), verbunden ist.

14. Fahrzeug, insbesondere Wohnwagen (1) oder Wohnmobil, mit einem Lastenträger (2) nach einem der vorstehenden Ansprüche.

## Revendications

1. Porte-charge (2), en particulier porte-vélos, destiné à être fixé à un véhicule, le porte-charge (2) comprenant
une structure de base (3) dont une extrémité avant peut être fixée à un véhicule, en particulier à une paroi arrière d'une caravane (1) ou d'un camping-car, et
une structure de réception de charge (8) destinée à recevoir une charge, en particulier au moins un vélo (9) ou un coffre à bagages,
le porte-charge (2) comprenant en outre un mécanisme de levage (12) par lequel la structure de réception de charge (8) est maintenue sur la structure de base (3) de telle manière qu'elle peut être déplacée par rapport à la structure de base (3) entre une position de chargement inférieure, dans laquelle une charge peut être disposée sur la structure de réception de charge (8), et une position d'utilisation supérieure, dans laquelle la structure de réception de charge (8) est maintenue directement sur la structure de base (3),
**dans lequel** le mécanisme de levage (12) comprend au moins un ressort, en particulier au moins un ressort à pression de gaz (17), de préférence au moins un ressort pneumatique, qui est agencé et conçu de telle sorte que la force à exercer sur la structure de réception de charge (8) par un opérateur est réduite lors du levage de la structure de réception de charge (8) de sa position de chargement inférieure à sa position d'utilisation supérieure, et
dans lequel le mécanisme de levage (12) comprend au moins une tringlerie (13), en particulier deux tringleries (13) espacées l'une de l'autre et disposées parallèlement l'une à l'autre, dans lequel un ressort, en particulier un ressort à pression de gaz (17), est associé à chaque tringlerie (13), dans lequel, en particulier, chaque tringlerie (13) est réalisée sous la forme d'une tringlerie à parallélogramme,
**caractérisé en ce que** chaque tringlerie (13) comprend deux manivelles, une manivelle supérieure (14) et une manivelle inférieure (15), une extrémité de chaque manivelle étant maintenue de manière pivotante sur la structure de base (3) et l'autre extrémité de chaque manivelle étant maintenue de manière pivotante sur la structure de réception de charge (8).

2. Support de charge (2) selon la revendication 1, **caractérisé en ce que** les manivelles s'étendent au moins sensiblement verticalement lorsque la structure de réception de charge (8) est dans sa position d'utilisation.

3. Support de charge (2) selon la revendication 1 ou 2, **caractérisé en ce qu'**une extrémité de chaque ressort, en particulier un boîtier de ressort (18) du ressort à pression de gaz (17), est maintenue de manière pivotante sur la structure de base (3) et l'autre extrémité du ressort, en particulier une tige de ressort (19) du ressort à pression de gaz (17), est maintenue de manière pivotante sur la structure de réception de charge (8) de telle sorte que l'axe longitudinal défini par le ressort à pression de gaz (17) est incliné par rapport aux manivelles.

4. Support de charge (2) selon la revendication 3, **caractérisé en ce que** chaque ressort est maintenu de manière pivotante au niveau de l'axe de pivotement d'une manivelle de la tringlerie (13) sur la structure de base (3) et au niveau de l'axe de pivotement de l'autre manivelle de la tringlerie (13) sur la structure de réception de charge (8) de telle sorte que le ressort, en particulier la tige de ressort (19), est tiré vers l'extérieur lorsque la structure de réception de charge (8) est dans sa position d'utilisation, et que le ressort, en particulier la tige de ressort (19), est tiré vers l'intérieur lorsque la structure de réception de charge (8) est dans sa position de chargement.

5. Support de charge (2) selon l'une quelconque des revendications 1 à 4, **caractérisé en ce que** les manivelles de chaque tringlerie (13) sont maintenues à une extrémité dans une partie inférieure de la structure de base (3) de l' et à l'autre extrémité dans une partie supérieure de la structure de réception de charge (8).

6. Support de charge (2) selon l'une quelconque des revendications 1 à 5, **caractérisé en ce que** la structure de base (3) comporte au moins un profilé vertical (4), en particulier un profilé vertical (4) associé à chaque articulation (13), et les manivelles sont maintenues dans une partie d'extrémité inférieure des profilés verticaux (4), et la structure de réception de charge (8) comporte, associé à chaque profilé vertical (4), un profilé de support (10) qui s'étend parallèlement aux profilés verticaux (4) et qui repose sur le profilé vertical (4) correspondant lorsque la structure de réception de charge (8) est dans sa position d'utilisation.

7. Support de charge (2) selon l'une quelconque des revendications précédentes, **caractérisé en ce que** des moyens de verrouillage sont prévus, grâce auxquels la structure de réception de charge (8) peut être verrouillée par rapport à la structure de base (3) lorsque la structure de réception de charge (8) est dans sa position d'utilisation.

8. Support de charge (2) selon la revendication 7, **caractérisé en ce que** les moyens de verrouillage comprennent au moins un élément de verrouillage (20), en particulier plusieurs éléments de verrouillage (20), de préférence sous la forme de crochets, qui sont maintenus de manière mobile, en particulier pivotante, sur la structure de réception de charge (8) entre une position d'engagement, dans laquelle les éléments de verrouillage (20) peuvent être en prise avec la structure de base (3), en particulier dans ou derrière des éléments d'engagement correspondants (21) de la structure de base (3), afin de verrouiller la structure de réception de charge (8) sur la structure de base (3) lorsque la structure de réception de charge (8) est dans sa position d'utilisation, et une position de déverrouillage, dans laquelle les éléments de verrouillage (20) sont désengagés de la structure de base (3) afin de libérer la structure de réception de charge (8) de la structure de base (3) lorsque la structure de réception de charge (8) doit être déplacée hors de sa position d'utilisation, dans laquelle, en particulier, les éléments de verrouillage (20) présentent un chanfrein (22) à leur extrémité avant libre afin de les amener automatiquement en prise à l' ement sur la structure de base (3) et/ou les éléments de verrouillage (20) sont sollicités vers leur position d'engagement.

9. Support de charge (2) selon la revendication 10 et l'une quelconque des revendications 1 à 6, **caractérisé en ce que** deux éléments de verrouillage (20) sont associés à chaque tringlerie (13), un élément de verrouillage supérieur (20) étant maintenu à une partie d'extrémité supérieure de la structure de réception de charge (8) et un élément de verrouillage inférieur (20) étant maintenu à une partie d'extrémité inférieure de la structure de réception de charge (8), les deux éléments de verrouillage (20) associés à une tringlerie (13) étant notamment couplés entre eux de telle sorte qu'ils se déplacent de manière synchrone entre leur position d'engagement et leur position de libération, les deux éléments de verrouillage (20) associés à une tringlerie (13) étant de préférence couplés au moyen d'une tige de liaison (23) qui est notamment reliée de manière pivotante à une extrém les deux éléments de verrouillage (20) associés à une tringlerie (13) sont couplés au moyen d'une tige de liaison (23) qui est notamment reliée de manière pivotante à une extrémité à l'élément de verrouillage inférieur (20) et à l'autre extrémité à l'élément de verrouillage supérieur (20).

10. Support de charge (2) selon l'une quelconque des revendications 8 ou 9, **caractérisé en ce que** la structure de réception de charge (8) comprend des moyens d'actionnement qui sont conçus et agencés pour déplacer les éléments de verrouillage (20) de leur position d'engagement vers leur position de libération.

11. Support de charge (2) selon la revendication 8, **caractérisé en ce que** les moyens d'actionnement comprennent un bouton-poussoir (24) qui est agencé sur la structure de réception de charge (8), en particulier sur une partie centrale inférieure (11) de la structure de réception de charge (8), le bouton-poussoir (24) étant couplé aux éléments de verrouillage (20) de telle manière qu'il peut être déplacé entre un état d'engagement, dans lequel les éléments de verrouillage (20) se trouvent dans leur position d'engagement, et un état de libération, dans lequel les éléments de verrouillage (20) peuvent être déplacés hors de leur position d'engagement vers leur position de libération.

12. Support de charge (2) selon la revendication 11, **caractérisé en ce que** le bouton-poussoir (24) est relié de manière fonctionnelle à au moins un câble Bowden (25) au moyen duquel le bouton-poussoir (24) est relié à au moins un élément de verrouillage (20).

13. Support de charge (2) selon la revendication 12 et les revendications 8 à 10, **caractérisé en ce que** le bouton-poussoir (24) est relié de manière fonctionnelle à un câble Bowden (25) associé à chaque tringlerie (13), et chaque câble Bowden (25) est relié, à son autre extrémité, à une tige de liaison (23) ou à un élément de verrouillage (20), en particulier à l'élément de verrouillage inférieur (20) associé à la tringlerie correspondante (13).

14. Véhicule, en particulier caravane (1) ou camping-car, avec un porte-charges (2) selon l'une quelconque des revendications précédentes.
